Europäisches Patentamt

European Patent Office

Office européen des brevets

(19)

(11) **EP 0 657 018 B1**

(12) **FASCICULE DE BREVET EUROPEEN**

(45) Date de publication et mention de la délivrance du brevet:
**18.03.1998 Bulletin 1998/12**

(51) Int Cl.⁶: **G01B 21/08**, G01B 11/06, G01B 7/06

(21) Numéro de dépôt: **94920505.8**

(22) Date de dépôt: **23.06.1994**

(86) Numéro de dépôt international:
**PCT/FR94/00758**

(87) Numéro de publication internationale:
**WO 95/01550 (12.01.1995 Gazette 1995/03)**

(54) **DISPOSITIF ET PROCEDE DE MESURE SANS CONTACT DE REVETEMENTS INTERNES DE TUYAUX DE FONTE**

**VORRICHTUNG ZUM BERÜHRUNGSLOSEN MESSEN VON INNEREN BELÄGEN VON GUSSEISERNEN ROHREN**

**CONTACTLESS INNER COATING MEASURING DEVICE AND METHOD FOR CAST IRON PIPES**

(84) Etats contractants désignés:
**CH DE ES FR GB LI**

(30) Priorité: **30.06.1993 FR 9308010**

(43) Date de publication de la demande:
**14.06.1995 Bulletin 1995/24**

(73) Titulaire: **PONT-A-MOUSSON S.A.
54000 Nancy (FR)**

(72) Inventeurs:
- **MULLER, Jean-Marie
  F-54250 Champigneulles (FR)**
- **RENARD, Christophe
  F-54200 Dommartin-les-Toul (FR)**
- **ROWDO, Claude
  F-54530 Pagny-sur-Moselle (FR)**

(74) Mandataire: **Puit, Thierry et al
PONT-A-MOUSSON S.A. / DDPP,
Service Propriété Industrielle,
BP 109
54704 Pont-à-Mousson Cedex (FR)**

(56) Documents cités:
EP-A- 0 402 527          WO-A-88/04028
DE-A- 3 701 558

- PATENT ABSTRACTS OF JAPAN vol. 015, no. 335 (P-1242) 26 Août 1991 & JP,A,03 123 811 (MEISAN K.K.) 27 Mai 1991

## Description

La présente invention est relative à la mesure sans contact de l'épaisseur de revêtements internes en mortier de ciment frais de tuyaux métalliques notamment en fonte.

Le revêtement interne de tuyaux métalliques peut être effectué par centrifugation d'une couche tubulaire d'un matériau liquide susceptible de durcir, notamment de mortier de ciment ou de béton.

En général, pour la mesure d'une épaisseur de revêtement sur un matériau métallique, on peut employer un appareil de mesure avec contact du type à courants de Foucault capable de donner la distance entre une bobine induisant des courants à fréquence élevée et la pièce à contrôler.

Lorsque la bobine s'approche ou s'éloigne du métal, les courants induits dans celui-ci varient et modifient l'impédance de la bobine, ce qui permet de faire une relation directe impédance/distance. Le zéro de l'appareil étant réglé au contact de la pièce métallique, lorsque la bobine est posée sur le ciment constituant le revêtement du tuyau, on obtient donc l'épaisseur de ce revêtement.

Cependant, ce type de mesure avec contact n'est pas possible sur du mortier de ciment frais en raison du marquage et de la détérioration de l'aspect du revêtement qui en résulterait.

Par ailleurs, un procédé du type par ultrasons, mis en oeuvre par l'extérieur du tuyau, compte tenu des différences d'impédance acoustique entre les matériaux, ne permet pas de déterminer à la fois l'épaisseur de la fonte et l'épaisseur du mortier de ciment.

D'autre part, un autre procédé du type par ultrasons mis en oeuvre cette fois par l'intérieur du tuyau nécessiterait une technique de couplage sans contact pour ne pas détériorer le revêtement fraîchement posé, technique encore très coûteuse et non éprouvée industriellement.

On connaît par DE-A-3701558 un dispositif de mesure inductif et optique pour déterminer une épaisseur de revêtement sur un support plan.

Le document EP-A-402527 décrit un dispositif et un procédé pour la mesure sans contact de l'épaisseur de revêtement en un matériau non conducteur, faisant appel à des capteurs à laser et à des capteurs à courants de Foucault.

Aucun de ces deux documents ne suggère l'utilisation, sur une chaîne de production de tuyaux et pour des raisons d'emplacement et de cadence, de deux blocs capteurs, le premier pour la fonction étalonnage et le second pour la fonction mesure.

L'invention a pour but de fournir un procédé permettant de mesurer l'épaisseur de revêtements internes en matériaux liquides susceptibles de se durcir de tuyaux métalliques, sans en détériorer l'aspect.

Elle concerne un dispositif de mesure sans contact de l'épaisseur de revêtements internes, en matériaux liquides susceptibles de durcir, de tuyaux métalliques et notamment de tuyaux en fonte, comportant:

- un bloc destiné à être introduit dans un tuyau dont on veut mesurer l'épaisseur du revêtement, ledit bloc étant formé de deux capteurs, un premier capteur pour mesurer la distance du bloc à la surface métallique du tuyau et un second capteur pour mesurer la distance du bloc à la surface du revêtement, et

- des moyens de traitement des données de sortie du bloc de capteurs en vue de déterminer l'épaisseur du revêtement à partir des données délivrées par les deux capteurs.

L'invention sera mieux comprise à l'aide de la description qui va suivre, donnée uniquement à titre d'exemple et faite en se référant aux dessins annexés, sur lesquels :

- la Fig.1 représente un schéma d'ensemble d'un dispositif selon l'invention de mesure d'épaisseur d'un revêtement en mortier de ciment d'un tuyau;

- la Fig.2 représente schématiquement un premier bloc de capteurs du dispositif de la Fig.1 destiné à l'étalonnage du dispositif;

- la Fig.3 représente schématiquement un second bloc de capteurs du dispositif de la Fig.1, destiné à effectuer les mesures;

- la Fig.4 représente schématiquement trois étapes de production de tuyaux à revêtement interne en ciment au cours desquelles on utilise le dispositif de mesure suivant l'invention; et

- la Fig.5 représente un algorithme de traitement des signaux du dispositif de mesure de la Fig.1.

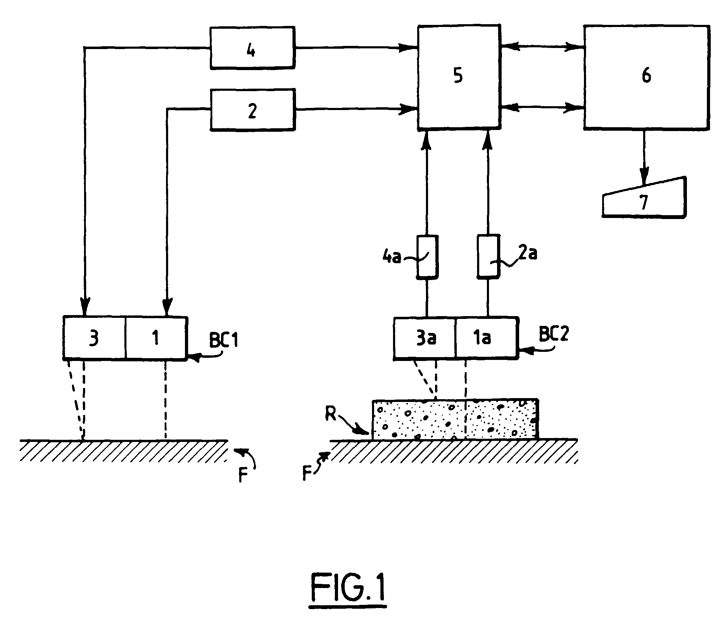

Le dispositif de mesure d'épaisseur sans contact de la Fig.1 comprend deux blocs de capteurs BC1,BC2 identiques.

Le bloc BC1 est constitué d'un capteur à courants de Foucault 1 connecté à un générateur de courant et amplificateur de sortie 2 et d'un capteur à diode laser 3 connecté à un générateur-amplificateur de sortie 4.

Le bloc BC2 comporte les mêmes composants que le bloc BC1, à savoir un capteur à courants de Foucault 1a et un capteur à diode laser 3a reliés chacun à un générateur-amplificateur 2a,4a.

Le choix des capteurs à courants de Foucault est dicté par la plage de mesure dans laquelle on veut évoluer, c'est-à-dire une distance au moins égale à celle de l'épaisseur du mortier de ciment plus une distance mécanique de non contact avec le mortier de ciment en tenant compte de la variation d'épaisseur du mortier de ciment et aussi d'une distance minimale liée à l'arrondi du tuyau.

La structure métallurgique de la pièce est susceptible d'influencer la mesure de la distance.

Or, la profondeur de pénétration des courants de Foucault dans le métal du tuyau est estimée par la formule : $\delta = 500/\sqrt{f\mu_r\sigma}$ , dans laquelle :

f est la fréquence en Herz

$\mu_r$ est la perméabilité (pour la fonte $\mu r \simeq 2$)

$\sigma$ est la conductivité en S/m, ($\mu_r$ et $\sigma$ dépendent du métal).

En travaillant avec une fréquence élevée, on diminue l'influence de la structure métallurgique puisque la pénétration diminue lorsque la fréquence augmente.

D'autres paramètres tels que les effets de forme (arrondi du tuyau), l'orientation du capteur par rapport à la surface du tuyau, l'état de surface du tuyau, la température et les parasites industriels perturbent la mesure de l'épaisseur.

Pour s'affranchir de ces problèmes, y compris celui lié à la structure métallurgique des pièces, il faut réaliser un étalonnage du capteur à courants de Foucault.

Cet étalonnage est réalisé pour chaque pièce mesurée avant la pose du revêtement en mortier de ciment.

Le choix des capteurs à diode laser est dicté lui aussi par une plage de mesure susceptible de donner l'épaisseur maximale du mortier de ciment dans tous les cas, et par leur faculté de "voir" toutes les couleurs du mortier de ciment (blanc, gris clair, brun clair) mouillé (couleur et puissance émises). Un capteur optique à triangulation laser permet de s'affranchir de paramètres perturbateurs tels que la couleur du béton et la déflexion du spot laser sur une lame d'eau.

L'inclinaison de la surface contrôlée par rapport à l'axe du capteur influence aussi la mesure du capteur laser.

Pour prendre en compte ce paramètre, des étalonnages préalables sont nécessaires.

L'étalonnage du capteur laser est effectué de façon connue une seule fois en laboratoire.

Ainsi qu'on peut le voir à la Fig.1, dans le bloc BC1, qui constitue le bloc d'étalonnage du dispositif, le capteur à courants de Foucault 1 et le capteur à diode laser 3 détectent tous deux la surface métallique non revêtue et dans le bloc BC2, qui constitue le bloc de mesure, le capteur à courants de Foucault 1a est sensible à la surface du tuyau en fonte F alors que le capteur à diode laser 3a détecte la surface du revêtement R du tuyau de fonte.

Le dispositif de mesure est implanté industriellement sur la chaîne de production de tuyaux et pour des raisons d'emplacement et de cadence, on utilise deux blocs capteurs, le bloc BC1 pour la fonction étalonnage, et le bloc BC2 pour la fonction mesure.

Les signaux de mesure analogiques de sortie des deux blocs BC1, BC2 sont enregistrés par une carte d'acquisition analogique-numérique 5 (de 12 bits susceptible d'enregistrer à une fréquence d'acquisition de 50 Hz et ayant des plages de mesures ± 10 V en différentiel). Un ordinateur ou unité de traitement 6 et son clavier 7 sont reliés à la carte d'acquisition 5 et complètent ainsi le dispositif de mesure.

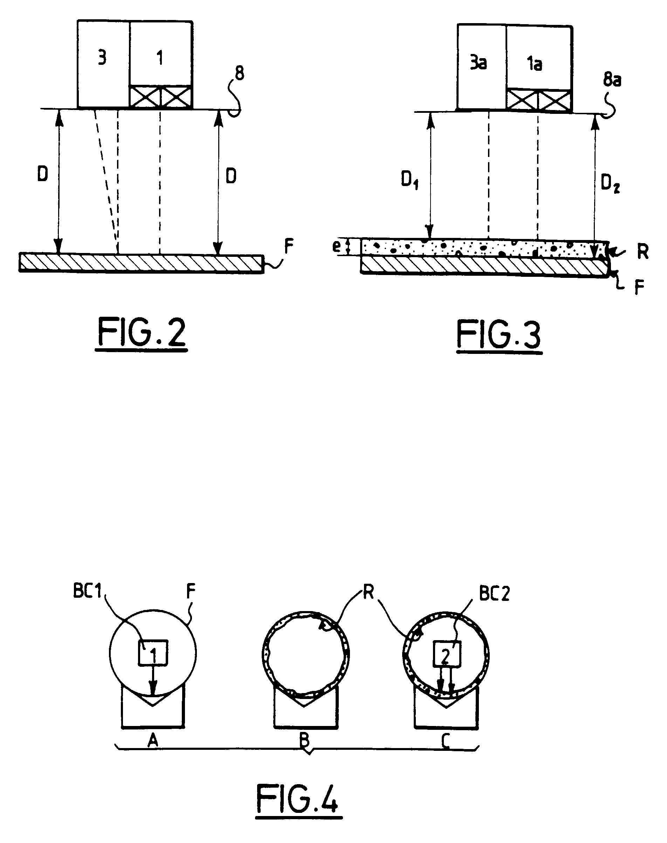

La Fig.2 représente le couple de capteurs du bloc BC1, assurant la fonction étalonnage sur la surface métallique seule.

On mesure la distance D entre la surface 8 commune aux capteurs 1 et 3 située en regard de la surface de la paroi métallique F et celle-ci à l'aide du capteur laser 3 et on mesure la réponse en tension du capteur 1 à courants de Foucault pour cette distance.

La mesure par le capteur à diode laser 3 sert à connaître avec précision la distance D, car on connaît déjà parfaitement la fonction distance-tension du capteur à diode laser quels que soient les paramètres de structure, de rugosité, etc.. de la surface observée.

En effet, le capteur à diode laser a déjà fait l'objet d'un étalonnage.

On procède alors à l'aide des deux capteurs 1 et 3 à la mesure de plusieurs distances D par déplacement du bloc BC1 transversalement à l'axe du tuyau, afin d'obtenir une courbe de réponse en tension du capteur à courants de Foucault 1, à partir de distances D mesurées par le capteur à diode laser 3.

On obtient donc, pour une pièce particulière considérée, les réponses U en volts pour plusieurs points, du capteur à courants de Foucault en fonction de la distance D en mm donnée avec précision par le capteur laser.

Ayant connaissance de plusieurs couples distance-tension U(D), résultant des mesures décrites plus haut, on établit l'allure de la réponse en distance D(U) en fonction de la tension U du capteur à courants de Foucault.

par la suite, au cours du traitement, on établira une approximation de cette fonction de réponse D(U) à un polynôme de degré 4 en utilisant la méthode des moindres carrés.

La Fig.3 représente le couple de capteurs du bloc BC2 dé mesure.

Comme indiqué plus haut, ce bloc comprend un capteur à diode laser 3a de mesure de la distance D1 entre la surface 8a commune aux deux capteurs et la surface R du revêtement en béton, et un capteur 1a à courants de Foucault qui mesure simultanément la distance D2 entre la surface 8a et la paroi métallique F pour le même point. On obtiendra par la suite l'épaisseur e du revêtement en effectuant la différence e = D2-D1.

Sur la figure 4, qui représente trois étapes de production de tuyaux, la première étape notée A est l'étalonnage sur le tuyau métallique F non revêtu, à l'aide du bloc BC1 de capteurs décrit en référence à la Fig.2 introduit dans ce tuyau.

Le bloc d'étalonnage BC1 est déplacé uniquement verticalement afin d'établir la fonction distance-tension du capteur à courants de Foucault.

Après retrait du bloc BC1, on effectue la pose du revêtement R en ciment sur ce tuyau métallique lors de la deuxième étape B.

Enfin, la troisième étape C consiste à introduire le bloc BC2 dans le tuyau revêtu et à mesurer l'épaisseur du revêtement R à l'aide de ce bloc de mesure décrit en référence à la Fig.3.

Le bloc de capteurs de mesure BC2 peut effectuer un mouvement vertical pour s'adapter à tous les diamètres de tuyaux et longitudinal pour mesurer le profil d'épaisseur du béton sur toute la longueur du tuyau.

Les mouvements des blocs de capteurs s'effectuent à l'aide de systèmes mécaniques motorisés, connus, qui ne seront pas décrits ici.

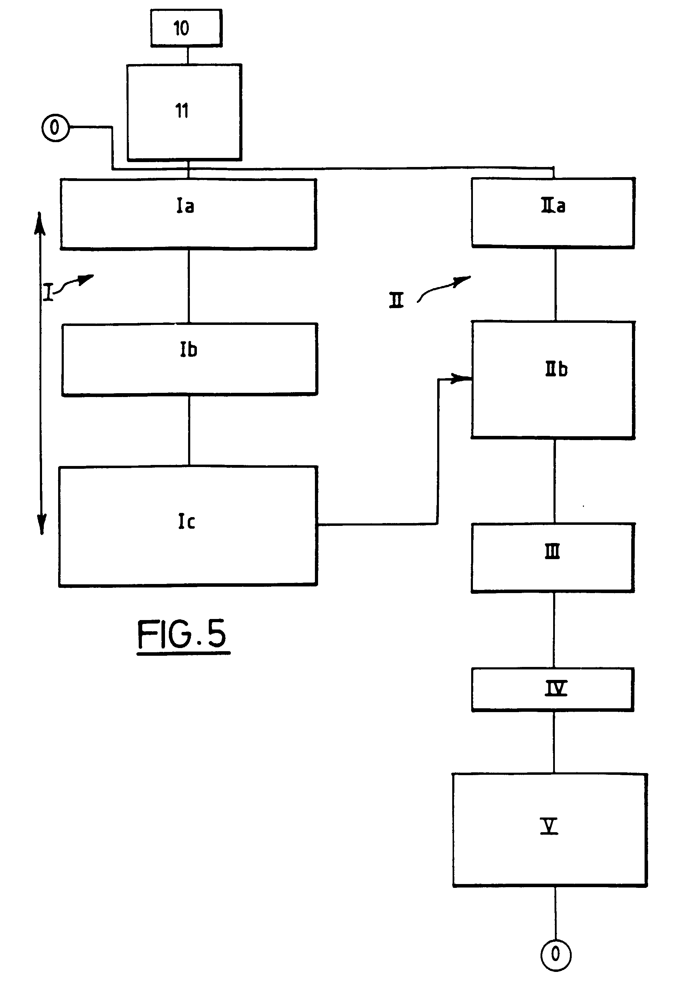

L'algorithme de la Fig.5 mis en oeuvre par l'unité de traitement 6 permet de traiter les mesures fournies par les blocs de capteurs BC1, BC2, afin d'obtenir un profil d'épaisseur pour chaque tuyau subissant les trois étapes décrites en référence à la Fig.4, notées dans l'ordre A,B,C.

Après le début 10 du traitement, le pas 11 assure l'initialisation en entrant la réponse caractéristique déterminée par étalonnage en laboratoire des deux capteurs à diode laser 3 et 3a : distance = f (tension laser).

La phase de traitement I au cours de l'étape A d'étalonnage du tuyau par le bloc de capteurs BC1 est assurée en trois pas.

Tout d'abord, l'acquisition des mesures de tension des deux capteurs 3 et 1 du bloc de capteurs BC1 pour des déplacements donnés a lieu au cours du pas Ia. A partir de ces mesures on procède au cours du pas Ib à une approximation de la réponse distance = f (tension) du capteur à courants de Foucault 1 par la méthode des moindres carrés à un polynôme de degré 4.

La fonction distance = f (tension) est alors mémorisée pour le tuyau considéré, ici le tuyau N+2 au cours du pas Ic. On remarquera que les fonctions distance des tuyaux N+1 et N ont déjà à ce moment été mémorisées au cours d'opérations analogues précédentes.

Parallèlement, on effectue le traitement II des mesures réalisées par le bloc de capteurs BC2 sur le tuyau N.

L'acquisition au cours du pas IIa des mesures des deux capteurs à diode laser et à courants de Foucault 3a et 1a est faite sur toute la longueur du tuyau N, par déplacement du bloc de capteurs BC2 dans celui-ci. Ensuite, on utilise au cours du pas IIb la fonction distance = f(tension) du capteur à diode laser entrée au pas 11 de l'algorithme, et la fonction distance = f (tension) du capteur à courants de Foucault 1, obtenue au cours de la phase Ic pour le tuyau N, afin de déterminer tous les couples de valeurs D1 et D2 le long du tuyau N.

Le calcul de l'épaisseur e = D2-D1 sur toute la longueur du tuyau N et la constitution d'un profil d'épaisseur e = f (position) sont effectués à la phase III. Puis ce profil d'épaisseur est mis en mémoire au cours de la phase IV.

Enfin, au cours de la phase V, une interface avec les moyens de manutention (non représentés) des tuyaux, donne un signal indiquant que la mesure de l'épaisseur a été effectuée et les moyens de manutention avancent d'un pas, le tuyau N+2 passe donc à l'étape B, le tuyau N+1, à l'étape C de mesure par le bloc de capteurs BC2, et un nouveau tuyau N+3 vient subir l'étalonnage par le bloc de capteurs BC1 à l'étape A.

Le traitement reprend alors au point O de l'algorithme.

Bien que l'on ait décrit un dispositif comprenant un bloc de mesure BC2 et un bloc d'étalonnage BC1, il est également possible de n'utiliser qu'un seul bloc pour effectuer ces deux fonctions et assurer ainsi son propre étalonnage.

## Revendications

1. Dispositif de mesure sans contact de l'épaisseur de revêtements internes, en matériaux liquides susceptibles de durcir, de tuyaux métalliques et notamment de tuyaux en fonte, du type comportant:

   - un bloc (BC2) de mesure formé de deux capteurs, un premier capteur (1a), à courant de Foucault pour mesurer la distance du bloc à la surface métallique et un second capteur (3a) à diode laser pour mesurer la distance du bloc à la surface du revêtement,
   - des moyens (5,6,7) de traitement des données de sortie du bloc de capteurs en vue de déterminer l'épaisseur du revêtement à partir des données délivrées par les deux capteurs (1a, 3a), et des moyens d'étalonnage du premier capteur (1a) à courants de Foucault du bloc de capteur de mesure (BC2),

   caractérisé en ce que les moyens d'étalonnage comprennent un bloc de capteurs (BC1) d'étalonnage du capteur (1a) à courants de Foucault du bloc de capteurs de mesure (BC2), ledit bloc d'étalonnage étant également relié aux moyens (5,6,7) de traitement de données.

2. Dispositif selon la revendication 1, caractérisé en ce que le bloc de capteurs (BC1) d'étalonnage comporte un premier capteur (1) à courants de Foucault destiné à délivrer des tensions correspondant à des distances du bloc à la surface métallique (F) d'un tuyau, identique au premier capteur (1a) du bloc (BC2) de mesure et un deuxième capteur (3) à diode laser de mesure de la distance du bloc à la surface libre dudit tuyau non revêtu.

3. Dispositif suivant l'une quelconque des revendications 1 à 2, caractérisé en ce que les moyens d'étalonnage comprennent le bloc de mesure (BC2) utilisé tour à tour comme bloc d'étalonnage et comme bloc de mesure.

4. Dispositif selon l'une quelconque des revendications précédentes, caractérisé en ce que les moyens de traitement sont une carte d'acquisition analogique-numérique (5), un ordinateur, ou unité de traitement (6) et son clavier (7).

**5.** Procédé de mesure sans contact de l'épaisseur de revêtements internes en matériaux liquides susceptibles de durcir, de tuyaux métalliques notamment de tuyaux en fonte, à l'aide du dispositif selon l'une quelconque des revendications précédentes, caractérisé en ce que :

- l'on introduit un bloc de capteurs de mesure (BC2) dans un tuyau revêtu, on mesure à l'aide du premier capteur (1a), la distance (D2) à la surface métallique et à l'aide du deuxième capteur (3a) du bloc, la distance (D1) à la surface libre du revêtement, et on calcule l'épaisseur (e) du revêtement par différence entre les deux distances précitées,

- le premier capteur (1a) étant un capteur à courants de Foucault, il comporte en outre une phase d'étalonnage de ce capteur, au cours de laquelle on introduit dans le tuyau non revêtu un bloc de capteurs (BC1; BC2), on déplace le bloc de capteurs transversalement à l'axe du tuyau, on mesure pour chaque déplacement du bloc de capteurs la distance de celui-ci à la surface métallique du tuyau à l'aide du capteur à diode laser (3; 3a) et la réponse en tension du capteur à courants de Foucault correspondante (1;1a), on transmet les données obtenues aux moyens de traitement (5,6) afin d'obtenir la fonction distance = f(tension) du capteur à courants de Foucault (1a) et on retire le bloc de capteurs (BC1; BC2) afin de permettre la pose d'un revêtement sur la surface interne du tuyau.

**6.** Procédé selon la revendication 5, caractérisé en ce que la fonction distance f=(tension) est obtenue par les moyens de traitement des données mesurées lors de la phase d'étalonnage au moyen d'une approximation de cette fonction à un polynôme de degré (4) par la méthode des moindres carrés.

**7.** Procédé suivant la revendication 5, caractérisé en ce que le bloc de capteurs utilisé au cours de la phase d'étalonnage est le bloc de capteurs de mesure (BC2).

**8.** Procédé suivant la revendication 5, caractérisé en ce que le bloc de capteurs utilisé au cours de la phase d'étalonnage est le bloc de capteurs d'étalonnage (BC1).

**Patentansprüche**

**1.** Vorrichtung zum berührungslosen Messen der Dicke von inneren Belägen aus flüssigen, aushärtbaren Materialien von metallischen Rohren und insbesondere von Rohren aus Gußeisen, des Typs mit:

- einem Meßblock (BC2), der von zwei Aufnehmern gebildet wird, einem ersten Wirbelstromaufnehmer (1a) zur Messung der Entfernung des Blockes zur metallischen Oberfläche und einem zweiten Laserdiodenaufnehmer (3a) zur Messung der Entfernung des Blockes zur Oberfläche des Belages,

- Einrichtungen (5, 6, 7) zur Verarbeitung der Ausgangsdaten des Aufnehmerblockes zur Bestimmung der Dicke des Belages ausgehend von den Daten, die von den zwei Aufnehmern (1a, 3a) geliefert werden, und Einrichtungen zum Abgleich des ersten Wirbelstromaufnehmers (1a) des Meßblockes (BC2),

dadurch gekennzeichnet, daß die Abgleicheinrichtungen einen Aufnehmerblock (BC1) zum Abgleich des Wirbelstromaufnelmers (1a) des Meßaufnehmerblockes (BC2) aufweisen, wobei der Abgleichblock ebenfalls mit den Datenverarbeitungseinrichtungen (5, 6, 7) verbunden ist.

**2.** Vorrichtung nach Anspruch 1, dadurch gekennzeichnet, daß der aufnehmerblock (BC1) zum Abgleichen einen ersten Wirbelstromaufnehmer (1), der zum Liefern von Spannungen dient, die den Entfernungen des Blockes zur metallischen Oberfläche (F) eines Rohres entsprechen, und identiscn zum ersten Aufnehmer (1a) des Meßblockes (BC2) ist, und einen zweiten Laserdiodenaufnehmer (3) zur Messung der Entfernung des Blockes zur freien Oberfläche des nicht beschichteten Rohres aufweist.

**3.** Vorrichtung nach einem der Ansprüche 1 oder 2, dadurch gekennzeichnet, daß die Abgleicheinrichtungen den Meßblock (BC2) aufweisen, der abwechselnd als Abgleich und als Meßblock verwendet wird.

**4.** Vorrichtung nach einem der vorhergehenden Ansprüche, dadurch gekennzeichnet, daß die Verarbeitungseinrichtungen eine analog-digitale Erfassungskarte (5), ein Rechner oder eine Verarbeitungseinheit (6) und seine beziehungsweise ihre Tastatur (7) sind.

**5.** Verfahren zum berührungslosen Messen der Dicke von inneren Belägen aus flüssigen, aushärtbaren Materialien von metallischen Rohren, insbesondere von Rohren aus Gußeisen, mittels der Vorrichtung nach einem der vorhergehenden Ansprüche, dadurch gekennzeichnet, daß:

- ein Meßaufnehmerblock (BC2) in ein beschichtetes Rohr eingeführt wird, mit Hilfe des ersten Aufnehmers (1a) die Entfernung (D2) zur metallischen Oberfläche und mit Hilfe des zweiten Aufnehmers (3a) des Blockes die Entfernung D1 zur freien Oberfläche des Belages gemessen wird und die Dicke (e) des Belages durch Differenzbildung zwischen den zwei vorgenannten Entfernungen berechnet wird,

- es, wobei der erste Aufnehmer (1a) ein Wirbelstromaufnehmer ist, darüber hinaus eine Abgleichphase dieses Aufnehmers aufweist, in deren Verlauf in das nicht beschichtete Rohr ein Aufnehmerblock (BC1; BC2) eingeführt wird, der Aufnehmerblock quer zur Rohrachse bewegt wird, für jede Bewegung des Aufnehmerblockes die Entfernung von diesem zur metallischen Oberfläche des Rohres mit Hilfe des Laserdiodenaufnehmers (3; 3a) und die Spannungsantwort des entsprechenden Wirbelstromaufnehmers (1; 1a) gemessen wird, die erhaltenen Daten zu den Verarbeitungseinrichtungen (5, 6) übertragen werden um die Funktion Entfernung = f (Spannung) des Wirbelstromaufnehmers (1a) zu erhalten und der Aufnehmerblock (BC1; BC2) entfernt wird, um das Aufbringen eines Belages auf die innere Oberfläche des Rohres zu ermöglichen.

6. Verfahren nach Anspruch 5, dadurch gekennzeichnet, daß die Funktion Entfernung = f (Spannung) durch die Einrichtungen zur Verarbeitung der gemessenen Daten während der Angleichphase mittels einer Annäherung dieser Funktion an ein Polynom 4. Grades durch das Verfahren der kleinsten Quadrate erhalten wird.

7. Verfahren nach Anspruch 5, dadurch gekennzeichnet, daß der im Verlauf der Abgleichphase verwendete Aufnehmerblock der Meßaufnehmerblock (BC2) ist.

8. Verfahren nach Anspruch 5, dadurch gekennzeichnet, daß der im Verlauf der Abgleichphase verwendete Aufnehmerblock der Abgleichaufnehmerblock (BC1) ist.

**Claims**

1. Device for contactless measurement of the thickness of internal linings, made of liquid materials capable of hardening, of metal pipes and in particular of cast-iron pipes, of the type including:

- a measuring unit (BC2) formed of two sensors, a first sensor (1a), of the Foucault current type, for measuring the distance of the unit from the metal surface and a second sensor (3a), of the laser diode type, for measuring the distance of the unit from the surface of the lining,

- means (5, 6, 7) for processing the output data from the sensor unit in order to determine the thickness of the lining from the data delivered by the two sensors (1a, 3a), and means for calibrating the first sensor (1a), of the Foucault current type, of the measuring sensor unit (BC2), characterised in that the calibrating means comprise a sensor unit (BC1) for calibrating the sensor (1a), of the Foucault current type, of the measuring sensor unit (BC2), the said calibrating unit likewise being connected to the data-processing means (5, 6, 7).

2. Device according to Claim 1, characterised in that the calibrating sensor unit (BC1) includes a first sensor (1), of the Foucault current type, intended to deliver voltages corresponding to distances of the unit from the metal surface (F) of a pipe, which sensor is identical to the first sensor (1a) of the measuring unit (BC2), and a second sensor (3), of the laser diode type, for measuring the distance of the unit from the free surface of the said pipe when unlined.

3. Device according to either one of Claims 1 and 2, characterised in that the calibrating means comprise the measuring unit (BC2) used alternately as a calibrating unit and as a measuring unit.

4. Device according to any one of the preceding claims, characterised in that the processing means are an analog/digital acquisition card (5), a computer, or a processing unit (6) and its keyboard (7).

5. Method for contactless measurement of the thickness of internal linings, made of liquid materials capable of hardening, of metal pipes, in particular of cast-iron pipes, with the aid of the device according to any one of the preceding claims, characterised in that:

- a measuring sensor unit (BC2) is introduced into a lined pipe, the distance (D2) from the metal surface is measured with the aid of the first sensor (1a) and the distance (D1) from the free surface of the lining is measured with the aid of the second sensor (3a) of the unit, and the thickness (e) of the lining is calculated from the difference between the two aforementioned distances,

- the first sensor (1a), being a sensor of the Foucault current type, further includes a phase for calibrating this sensor, in the course of which a sensor unit (BC1; BC2) is introduced into the unlined pipe, the sensor unit is displaced transversely to the axis of the pipe, for each displacement of the sensor unit the distance thereof from the metal surface of the pipe is measured with the aid of the sensor (3; 3a) of the laser diode type and the corresponding voltage response of the sensor (1; 1a) of the Foucault current type is measured, the data obtained is transmitted to the processing means (5, 6) in order to obtain the function distance = f(voltage) of the sensor (la) of the Foucault current type, and the sensor unit (BC1; BC2) is withdrawn in order to allow a lining to be put on the internal surface of the pipe.

6. Method according to Claim 5, characterised in that the function distance f=(voltage) is obtained by the means for processing the data measured during the calibrating phase by means of an approximation of this function to a polynomial of the 4th degree by the method of the least error squares.

7. Method according to Claim 5, characterised in that the sensor unit used in the course of the calibrating phase is the measuring sensor unit (BC2).

8. Method according to Claim 5, characterised in that the sensor unit used in the course of the calibrating phase is the calibrating sensor unit (BC1).

## FIG.1

FIG.2

FIG.3

FIG.4

FIG.5